# EUROPÄISCHE PATENTSCHRIFT

(11) **EP 3 334 920 B1**
(45) Veröffentlichungstag und Bekanntmachung des Hinweises auf die Patenterteilung: **09.09.2020**
(21) Anmeldenummer: 16750411.7
(22) Anmeldetag: 26.07.2016
(51) Int. Cl.: F02M 35/10, F16L 11/04, F16L 47/02

(54) **LUFTLEITUNGSROHR FÜR DEN ANSAUGTRAKT EINES VERBRENNUNGSMOTORS**
AIR PIPE FOR THE INTAKE TRACT OF AN INTERNAL COMBUSTION ENGINE
CONDUITE D'AIR DESTINÉE AU SYSTÈME D'ADMISSION D'UN MOTEUR À COMBUSTION INTERNE

(30) Priorität: 12.08.2015 DE 102015215394
(43) Veröffentlichungstag der Anmeldung: 20.06.2018
(73) Patentinhaber: ETM Engineering Technologie Marketing GmbH, 07929 Saalburg-Ebersdorf (DE)
(72) Erfinder: KLOCKOW, Klaus, 63599 Biebergemünd (DE); DONTH, Christoph, 07343 Wurzbach (DE)
(74) Vertreter: Patentanwälte Ruff, Wilhelm, Beier, Dauster & Partner mbB
(86) Internationale Anmeldenummer: PCT/EP2016/067751
(87) Internationale Veröffentlichungsnummer: WO 2017/025315

(56) Entgegenhaltungen:
- EP-A1- 1 878 961
- EP-A1- 2 535 365
- EP-A1- 2 679 797
- DE-A1-102004 053 985
- DE-A1-102009 044 014
- DE-U1-202012 103 603
- FR-A3- 2 922 963

## Beschreibung

### ANWENDUNGSGEBIET UND STAND DER TECHNIK

Die Erfindung betrifft ein Luftleitungsrohr für den Ansaugtrakt eines Verbrennungsmotors.

Luftleitungsrohre für den Ansaugtrakt eines Verbrennungsmotors sind bekannt. Sie dienen allgemein der Zufuhr von Verbrennungsluft an einen Verbrennungsmotor.

Als Luftansaugrohre werden Luftleitungsrohre bezeichnet, welche einen Motorluftfilter mit einem Verdichter oder Turbolader verbinden. Entsprechende Luftansaugrohre sind beispielsweise aus den Druckschriften DE 10 2007 007 119 A1, DE 10 2012 207 198 A1, DE 197 01 118 A1, DE 40 32 321 A1, DE 196 13 467 A1, DE 199 15 819 A1, DE 197 45 192 A1, EP 2 000 659 A2, EP 2 172 639 B1, WO 2012/113480 A1, EP 1 878 961 A1, DE 10 2009 044 014 A1, DE 10 2004 053 985 A1, DE 20 2012 103 603 U1, FR 2 922 963 A3 sowie EP 2 679 797 A1 bekannt.

Aus der EP 2 535 365 A1 sind Polyamid-Formmassen für den Ansaugtrakt einer Brennkraftmaschine bekannt.

Als Ladeluftrohre werden üblicherweise Luftleitungsrohre bezeichnet, welche einen Turbolader mit einem Ladeluftkühler oder einen Ladeluftkühler mit einer Drosselklappe verbinden. Ein Ladeluftrohr ist beispielsweise Gegenstand der DE 20 2006 016 187 U1.

Um den extremen Druck- und Temperaturbedingungen zu genügen, welche beim Betrieb eines Verbrennungsmotors auftreten, müssen entsprechend vorgesehene Luftleitungsrohre über eine gewisse mechanische Festigkeit, Steifigkeit sowie thermische Beständigkeit verfügen. Gattungsgemäße Luftleitungsrohre zeichnen sich jedoch mitunter durch eine eng begrenzte Materialtoleranz aus. Dies kann bei der Montage mit anderen Bauteilen zu Problemen führen. Beispielsweise können bei der Montage von gattungsgemäßen Luftansaugrohren an einen Luftfilter - bedingt durch eine zu geringe Materialtoleranz - Undichtigkeiten auftreten, wodurch die dem Luftfilter nachgeschalteten Motorbauteile mit Schmutz- und Staubpartikeln belastet werden können.

Um die Materialtoleranz zu verbessern und das Auftreten von Undichtigkeiten zu vermeiden, werden Luftansaugrohre daher häufig mit einem Elastomerschlauch verbunden. Dies führt jedoch zu einer Kostenerhöhung und obendrein zu einer Verkomplizierung der Montage.

### AUFGABE UND LÖSUNG

Der Erfindung liegt als technisches Problem die Bereitstellung eines Luftleitungsrohrs zugrunde, welches insbesondere die aus dem Stand der Technik erwähnten Nachteile umgeht.

Die Erfindung löst dieses Problem durch die Bereitstellung eines Luftleitungsrohrs mit den Merkmalen des Anspruchs 1 sowie durch die Verwendung eines Luftleitungsrohrs gemäß Anspruch 5. Bevorzugte Ausführungsformen des Luftleitungsrohrs sind in den abhängigen Ansprüchen 2 bis 4 definiert.

Gemäß einem ersten Aspekt betrifft die Erfindung ein Luftleitungsrohr, vorzugsweise für den Ansaugtrakt eines Verbrennungsmotors. Bei dem Verbrennungsmotor handelt es sich bevorzugt um einen Turbomotor, insbesondere um einen Bi-Turbomotor.

Das Luftleitungsrohr weist ein erstes Rohrbauteil aus einem ersten Material und ein zweites Rohrbauteil aus einem zweiten Material auf.

Das Luftleitungsrohr gemäß der vorliegenden Erfindung zeichnet sich dadurch aus, dass das erste Material flexibler, insbesondere weicher und/oder elastischer, ist als das zweite Material.

Unter dem Ausdruck "Luftleitungsrohr" soll im Sinne der vorliegenden Erfindung ein Rohr, insbesondere Rundrohr, verstanden werden, welches dazu gestaltet ist, einem Verbrennungsmotor Luft, sogenannte Verbrennungsluft, zuzuführen. Bei der Luft kann es sich um Frischluft, insbesondere gefilterte Frischluft, um eine mittels eines Verdichters (Kompressor) oder Turboladers erzeugte Warm- oder Heißluft oder um eine mittels eines Ladeluftkühlers erzeugte Kaltluft handeln. Abhängig hiervon kann es sich bei dem erfindungsgemäßen Luftleitungsrohr beispielsweise um ein Luftansaugrohr oder Ladeluftrohr handeln, worauf im Folgenden noch näher eingegangen werden wird.

Unter dem Ausdruck "Rohrbauteil" soll im Sinne der vorliegenden Erfindung ein rohrförmiges, insbesondere rundrohrförmiges, Bauteil verstanden werden.

Eine flexiblere, insbesondere weichere und/oder elastischere, Ausgestaltung des ersten Rohrbauteils gegenüber dem zweiten Rohrbauteil führt insgesamt zu einer Verbesserung, insbesondere Erweiterung, der Materialtoleranzen des erfindungsgemäßen Luftleitungsrohres gegenüber anderen Bauteilen, insbesondere gegenüber anderen Bauteilen eines Motoransaugtrakts. So ist insbesondere das erste Rohrbauteil aufgrund seiner vorzugsweise flexibleren Eigenschaften für eine Verbindung mit einem Bauteil, wie beispielsweise einem Luftfilter, prädestiniert, wo eine gewisse Flexibilität zur Vermeidung von Undichtigkeiten erwünscht ist. Dagegen eignet sich insbesondere das zweite Rohrbauteil aufgrund seiner vorzugsweise steiferen und/oder mechanisch festeren Eigenschaften beispielsweise für eine Verbindung mit einem Bauteil des Motorraumes, insbesondere einem Turbolader, wo Flexibilitätsgesichtspunkte eine eher untergeordnete Rolle spielen.

Insgesamt ist das erfindungsgemäße Luftleitungsrohr daher vielseitiger einsetzbar als konventionelle Luftleitungsrohre.

In einer bevorzugten Ausführungsform weist das erste Material ein Elastizitätsmodul von 1000 MPa bis 1400 MPa, insbesondere 1000 MPa bis 1200 MPa, vorzugsweise 1000 MPa bis 1100 MPa, auf.

In einer weiteren Ausführungsform weist das zweite Material ein Elastizitätsmodul von 2500 MPa bis 3000 MPa, insbesondere 2600 MPa bis 3000 MPa, vorzugsweise 2700 MPa bis 3000 MPa, auf.

Bei dem ersten Material handelt es sich vorzugsweise um ein unverstärktes Material, d.h. um ein Material, welches frei von Verstärkungsmitteln ist.

In einer weiteren Ausführungsform weist das erste Material flexibilitätserhöhende, insbesondere weichheitsfördernde und/oder elastizitätsfördernde, Additive (Zusatzstoffe) auf.

Das zweite Material weist erfindungsgemäß ein Verstärkungsmittel auf. Mit anderen Worten handelt es sich bei dem zweiten Material erfindungsgemäß um ein verstärktes Material.

Das Verstärkungsmittel kann ausgewählt sein aus der Gruppe aufweisend Fasern, Partikel, insbesondere kugelförmige Partikel, Pulver, Puder, Mineralien wie Silikate und Kombinationen davon.

Die Fasern können ausgewählt sein aus der Gruppe aufweisend anorganische Fasern, metallische Fasern, organische Fasern, Naturfasern und Kombinationen davon.

Die Fasern können insbesondere ausgewählt sein aus der Gruppe aufweisend Basaltfasern, Borfasern, Glasfasern, Keramikfasern, Kieselsäurefasern, Stahlfasern, Polyamidfasern, Aramidfasern, Kohlenstofffasern/Carbonfasern, Nylonfasern, Polyethylenfasern, Plexiglasfasern, Flachsfasern, Hanffasern, Holzfasern, Sisalfasern und Kombinationen davon.

Bei den Fasern kann es sich weiterhin um Lang- und/oder Kurzfasern handeln.

Unter dem Ausdruck "Langfasern" sollen im Sinne der vorliegenden Erfindung vorzugsweise Fasern mit einer Länge > 6 mm, insbesondere 7 mm bis 50 mm, bevorzugt 7 mm bis 20 mm, weiter bevorzugt 7 mm bis 15 mm, besonders bevorzugt 8 mm bis 10 mm, verstanden werden.

Unter dem Ausdruck "Kurzfasern" sollen im Sinne der vorliegenden Erfindung vorzugsweise Fasern mit einer Länge ≤ 6 mm, insbesondere < 6 mm, verstanden werden. Bevorzugt sollen unter dem Ausdruck "Kurzfasern" im Sinne der vorliegenden Erfindung Fasern mit einer Länge von 2 mm bis 6 mm, weiter bevorzugt 4 mm bis 6 mm, besonders bevorzugt 4 mm bis 5 mm, verstanden werden.

Bei den oben genannten Partikeln kann es sich insbesondere um Glaskugeln handeln.

In einer besonders bevorzugten Ausführungsform ist das Verstärkungsmittel ausgewählt aus der Gruppe aufweisend Carbon- bzw. Kohlenstofffasern, Glasfasern, Glaskugeln, Mineralien wie Talk bzw. Talkum und Kombinationen davon.

In einer weiteren Ausführungsform weist das Verstärkungsmittel einen Anteil von 10 Gew.-% bis 50 Gew.-%, insbesondere 15 Gew.-% bis 45 Gew.-%, bevorzugt 20 Gew.-% bis 35 Gew.-%, auf, bezogen auf das Gesamtgewicht des zweiten Materials.

Erfindungsgemäß weist das erste Material ein thermoplastisches/elastoplastisches Polymer auf.

Erfindungsgemäß weist das zweite Material ein thermoplastisches/elastoplastisches Polymer auf.

Der Ausdruck "thermoplastisches/elastoplastisches Polymer" bedeutet im Sinne der vorliegenden Erfindung ein thermoplastisches oder elastoplastisches Polymer oder ein sogenanntes Blend aus thermoplastischen oder elastoplastischen Polymeren, d. h. eine Mischung aus zwei oder mehreren unterschiedlichen thermoplastischen oder elastoplastischen Polymeren. Bezüglich geeigneter thermoplastischer/elastoplastischer Polymere sei auf die im Folgenden gemachten Ausführungen verwiesen.

Unter dem Ausdruck "elastoplastisches Polymer" soll im Sinne der vorliegenden Erfindung ein thermoplastisches Elastomer oder ein sogenanntes Blend aus thermoplastischen Elastomeren, d. h. eine Mischung aus zwei oder mehreren unterschiedlichen thermoplastischen Elastomeren, verstanden werden. Bezüglich geeigneter thermoplastischer Elastomere sei ebenfalls auf die im Folgenden gemachten Ausführungen verwiesen.

Erfindungsgemäß weisen das erste Material und das zweite Material jeweils ein thermoplastisches/ elastoplastisches, insbesondere thermoplastisches, Polymer auf.

Vorzugsweise weist das erste Material ein anderes thermoplastisches/elastoplastisches Polymer auf als das zweite Material.

In einer weiteren Ausführungsform weist das erste Material ein unverstärktes thermoplastisches/elastoplastisches Polymer auf, d.h. ein thermoplastisches/elastoplastisches Polymer, welches frei von Verstärkungsmitteln ist.

Erfindungsgemäß weist das zweite Material ein verstärktes, insbesondere faserverstärktes, vorzugsweise glasfaserverstärktes, thermoplastisches/elastoplastisches Polymer auf, d.h. ein thermoplastisches/elastoplastisches Polymer, welches ein Verstärkungsmittel aufweist. Bezüglich des Verstärkungsmittels wird auf die bisherige Beschreibung Bezug genommen.

Bei dem Polymer kann es sich grundsätzlich um ein Homopolymer handeln.

Alternativ kann es sich bei dem Polymer um ein Copolymer handeln, d.h. um ein Polymer, welches zwei oder mehr verschiedenartige Monomereinheiten aufweist oder aus zwei oder mehr verschiedenartigen Monomereinheiten besteht.

Weiterhin kann es sich bei dem Polymer um ein statistisches, d.h. randomisiertes, Polymer handeln.

Alternativ kann es sich bei dem Polymer um ein Block-Copolymer, d.h. um ein segmentiertes Copolymer, handeln.

Erfindungsgemäß ist das Polymer ein Polyamid, d. h. ein Polymer, vorzugsweise lineares Polymer, mit sich regelmäßig wiederholenden Amidbindungen entlang der polymeren Hauptkette. Es hat sich gezeigt, dass die oben erwähnten Vorteile der Erfindung bei Verwendung von Polyamiden zur Herstellung des ersten und/oder zweiten Rohrbauteils, insbesondere des ersten und zweiten Rohrbauteils, besonders stark zur Geltung kommen.

Bei dem Polymer kann es sich insbesondere um ein Homopolyamid handeln. Nach dem chemischen Aufbau kann es sich bei dem Homopolyamid um einen Aminocarbonsäure-Typ oder Diamin-Dicarbonsäure-Typ handeln. Ersterer wird aus nur einem einzigen Monomer durch z. B. Polykondensation einer ω-Aminocarbonsäure oder durch ringöffnende Polymerisation zyklischer Amide (Lactame) hergestellt. Der Aufbau des Diamin-Dicarbonsäure-Typs erfolgt dagegen durch Polykondensation zweier komplementärer Monomere, beispielsweise einem Diamin und einer Dicarbonsäure.

Das Polyamid ist in einer weiteren Ausführungsform ein Homopolyamid, welches ausgewählt ist aus der Gruppe aufweisend Polycaprolactam (Polykondensat aus ε-Caprolactam; auch als Polyamid 6 bezeichnet), Polytetramethylenadipinamid (Polykondensat aus Tetramethylendiamin und Adipinsäure; auch als Polyamid 46 bezeichnet), Polyhexamethylenadipinamid (Polykondensat aus Hexamethylendiamin und Adipinsäure; auch als Polyamid 66 bezeichnet), Polyhexamethylenazelainamid (Polykondensat aus Hexamethylendiamin und Azelainsäure; auch als Polyamid 69 bezeichnet), Polyhexamethylensebacinamid (Polykondensat aus Hexamethylendiamin und Sebacinsäure; auch als Polyamid 610 bezeichnet), Polyhexamethylendodecanamid (Polykondensat aus Hexamethylendiamin und Dodecandisäure; auch als Polyamid 612 bezeichnet), Polyenantholactam (Polyamid 7), Polyundecanolactam bzw. Poly-11-undecanamid (Polykondensat aus 11-Aminoundecansäure; auch als Polyamid 11 bezeichnet), Polydodecanolactam (Polykondensat aus ω-Laurinlactam; auch als Polyamid 12 bezeichnet), Polydodecandodecanamid (Polykondensat aus Dodecandiamin und Dodecandisäure; auch als Polyamid 1212 bezeichnet) und Kombinationen, insbesondere Blends davon.

Ein besonders geeignetes Polycaprolactam bzw. Polyamid 6 ist beispielsweise unter der Bezeichnung Ultramid® B kommerziell erhältlich.

Ein besonders geeignetes Polyhexamethylenadipinamid bzw. Polyamid 66 ist beispielsweise unter der Bezeichnung Ultramid® A kommerziell erhältlich.

Ein besonders geeignetes Polyhexamethylensebacinamid bzw. Polyamid 610 ist beispielsweise unter der Bezeichnung Ultramid® S kommerziell erhältlich.

In einer weiteren Ausführungsform handelt es sich bei dem Polyamid um ein Copolyamid, d. h. um ein Polyamid, welches sich von mehreren, vorzugsweise wenigstens drei, unterschiedlichen Monomeren ableitet. Vorzugsweise handelt es sich bei dem Copolyamid um ein Terpolyamid (ternäres Copolyamid), d. h. um ein Polyamid, welches sich von drei unterschiedlichen Monomeren ableitet.

Das Polyamid ist in einer weiteren Ausführungsform ein Copolyamid, welches ausgewählt ist aus der Gruppe aufweisend Poly(hexamethylenadipinamid-co-caprolactam (Polykondensat aus Hexamethylendiamin, Adipinsäure und ε-Caprolactam; auch als Polyamid 6/66 bezeichnet), Polyamid 6T/6, Polyamid 6T/66, Polyamid 6T/66/6I, Polyamid 6T/6I, Polyamid 66/610 und Kombinationen, insbesondere Blends, davon.

Ein besonders geeignetes Poly(hexamethylenadipinamid-co-caprolactam bzw. Polyamid 6/66 ist beispielsweise unter der Bezeichnung Ultramid® C kommerziell erhältlich.

Der Ausdruck "Polyamid 6T/6" definiert im Sinne der vorliegenden Erfindung ein Polykondensat aus Hexamethylendiamin, Terephthalsäure und ε-Capolactam. Ein besonders geeignetes Polyamid 6T/6 ist beispielsweise unter der Bezeichnung Ultramid® T kommerziell erhältlich.

Der Ausdruck "Polyamid 6T/66" definiert im Sinne der vorliegenden Erfindung ein Polykondensat aus Hexamethylendiamin, Terephthalsäure und Adipinsäure.

Der Ausdruck "Polyamid 6T/66/6I" definiert im Sinne der vorliegenden Erfindung ein Polykondensat aus Hexamethylendiamin, Terephthalsäure, Adipinsäure und Isophthalsäure.

Der Ausdruck "Polyamid 6T/6I" definiert im Sinne der vorliegenden Erfindung ein Polykondensat aus Hexamethylendiamin, Terephthalsäure und Isophthalsäure.

Der Ausdruck "Polyamid 66/610" definiert im Sinne der vorliegenden Erfindung ein Polykondensat aus Hexamethylendiamin, Adipinsäure und Sebacinsäure.

In einer weiteren Ausführungsform ist das Polyamid, insbesondere Homo- oder Copolyamid, ausgewählt aus der Gruppe aufweisend Ultramid® A unverstärkt, Ultramid® A verstärkt, Ultramid® B unverstärkt, Ultramid® B verstärkt, Ultramid® D Aqua verstärkt, Ultramid® S Balance unverstärkt, Ultramid® S Balance verstärkt, Ultramid® T unverstärkt, Ultramid® T verstärkt und Kombinationen, insbesondere Blends, davon.

In einer bevorzugten Ausführungsform weist das erste Material ein anderes Polyamid auf als das zweite Material. Bevorzugt weist das erste Material ein Copolyamid, insbesondere ein Terpolyamid, auf und das zweite Material ein Homopolyamid. Bezüglich in Frage kommender Polyamide, insbesondere Homo- und/oder Copolyamide, wird auf die bisherige Beschreibung Bezug genommen.

In einer besonders bevorzugten Ausführungsform weist das erste Material ein unverstärktes Polyamid, insbesondere unverstärktes Copolyamid, bevorzugt unverstärktes Terpolyamid, auf, d. h. ein Polyamid, insbesondere Copolyamid, bevorzugt Terpolyamid, welches frei von Verstärkungsmitteln ist. Bezüglich in Frage kommender Polyamide, insbesondere Copolyamide, bevorzugt Terpolyamide, wird ebenfalls auf die bisherige Beschreibung Bezug genommen.

Vorzugsweise weist das erste Material ein Copolyamid, insbesondere unverstärktes Copolyamid, auf, welches aus Hexamethylendiamin, Adipinsäure und ε-Caprolactam hergestellt ist. Mit anderen Worten weist das erste Material vorzugsweise Poly(hexamethylenadipinamid-co-caprolactam auf, d. h. ein Polykondensat aus Hexamethylendiamin, Adipinsäure und ε-Caprolactam (Polyamid 6/66). Bei dem Copolyamid kann es sich insbesondere um ein wärme- oder hitzestabilisiertes Copolyamid handeln.

Erfindungsgemäß weist das zweite Material ein verstärktes Polyamid, insbesondere verstärktes Homopolyamid, d.h. ein mit einem Verstärkungsmittel compoundiertes bzw. versehenes Polyamid, insbesondere Homopolyamid, auf. Bevorzugt weist das zweite Material ein faserverstärktes, vorzugsweise glasfaserverstärktes, Polyamid, insbesondere Homopolyamid, auf. Bezüglich in Frage kommender Polyamide, insbesondere Homopolyamide, sowie bezüglich des Verstärkungsmittels wird auf die bisherige Beschreibung Bezug genommen.

Vorzugsweise weist das zweite Material ein Homopolyamid, insbesondere ein verstärktes, bevorzugt faserverstärktes, besonders bevorzugt glasfaserverstärktes, Homopolyamid, vom Diamin-Dicarbonsäure-Typ auf. Bevorzugt handelt es sich bei dem Homopolyamid um Polyhexamethylenadipinamid, d. h. um ein Polykondensat aus Hexamethylendiamin und Adipinsäure (Polyamid 66). Bezüglich weiterer Merkmale des Verstärkungsmittels wird auf die bisherige Beschreibung Bezug genommen.

Die in den vorangegangenen Ausführungsformen beschriebenen Polyamide, insbesondere Copolyamide, zeichnen sich durch eine gegenüber anderen Materialien erhöhte mechanische Festigkeit, Steifigkeit und thermische Beständigkeit aus. Sie zeigen weiterhin insbesondere eine erhöhte Widerstandsfähigkeit gegenüber exogenen Einflüssen, wie beispielsweise Marderverbiss. Gleichzeitig verfügen sie über ausreichend flexible Eigenschaften, um beispielsweise eine flexible und mithin besser abdichtende Verbindung mit einem Motorluftfilter oder einem anderen Bauteil des Motoransaugtrakts eingehen zu können.

Grundsätzlich können das erste Rohrbauteil und das zweite Rohrbauteil form-, kraft- und/oder stoffschlüssig miteinander verbunden sein.

Vorzugsweise sind das erste Rohrbauteil und das zweite Rohrbauteil jedoch stoffschlüssig, insbesondere ausschließlich stoffschlüssig, miteinander verbunden. Dies bietet den Vorteil einer einfacheren Montage der Rohrbauteile zu dem erfindungsgemäßen Luftleitungsrohrs. So kann insbesondere auf den Einsatz von Befestigungsmitteln, wie beispielsweise Schlauchklemmen, verzichtet werden. Außerdem entfällt das Risiko, dass die Integrität und damit die Dichtigkeit des Luftleitungsrohrs, insbesondere des ersten Rohrbauteils und/oder des zweiten Rohrbauteils, durch ein Befestigungsmittel beeinträchtigt werden. Ein weiterer Vorteil besteht in einer Materialeinsparung, insbesondere bei dem ersten Rohrbauteil. So ist im Falle einer stoffschlüssigen Verbindung insbesondere für das erste Rohrbauteil eine geringere Wandungsdicke für den Montageschritt erforderlich, was zu einer weiteren Flexibilisierung des ersten Rohrbauteils beiträgt.

Grundsätzlich können das erste Rohrbauteil und das zweite Rohrbauteil miteinander verklebt sein. Mit anderen Worten kann es grundsätzlich vorgesehen sein, dass das erste Rohrbauteil und das zweite Rohrbauteil durch eine Klebeverbindung miteinander verbunden sind.

Erfindungsgemäß sind das erste Rohrbauteil und das zweite Rohrbauteil mittels Schweißen miteinander verbunden. Mit anderen Worten ist es erfindungsgemäß bevorzugt, wenn das erste Rohrbauteil und das zweite Rohrbauteil durch eine Schweißverbindung miteinander verbunden sind. Die im vorletzten Absatz erwähnten Vorteile kommen im Falle einer Schweißverbindung besonders stark zur Geltung.

Grundsätzlich können das erste Rohrbauteil und das zweite Rohrbauteil mittels Pressverbindungsschweißen, Vibrationsschweißen und/oder Ultraschallschweißen miteinander verbunden sein.

Bevorzugt sind das erste Rohrbauteil und das zweite Rohrbauteil mittels Pressverbindungsschweißen, insbesondere Reibschweißen, vorzugsweise Rotationsreibschweißen, miteinander verbunden.

Das erste Rohrbauteil und das zweite Rohrbauteil können weiterhin mittels Spritzgießen, Blasformen, Extrudieren oder kombinierten Techniken davon hergestellt werden. Diese Verfahren sind dem Fachmann bekannt, so dass auf weitergehende Ausführungen hierzu verzichtet wird.

Entsprechend können das ersten Rohrbauteil und/oder das zweite Rohrbauteil als Spritzgussformteil, Blasformteil oder Extrusionsformteil ausgebildet sein.

Besonders bevorzugt sind das erste Rohrbauteil und das zweite Rohrbauteil jeweils als Blasformteil ausgestaltet.

In einer weiteren Ausführungsform ist das erste Rohrbauteil kürzer als das zweite Rohrbauteil.

In einer weiteren Ausführungsform weist das erste Rohrbauteil eine Wandungsdicke von 1,8 mm bis 2,2 mm, insbesondere 2,0 mm bis 2,2 mm, bevorzugt 2,0 mm bis 2,1 mm, auf.

Das zweite Rohrbauteil weist in einer weiteren Ausführungsform eine Wandungsdicke von 2,4 mm bis 3,5 mm, insbesondere 2,5 mm bis 3,5 mm, bevorzugt 2,5 mm bis 3,0 mm, auf.

In einer weiteren Ausführungsform ist ein anstromseitiges Ende und/oder ein abstromseitiges Ende des Luftleitungsrohres, insbesondere ein anstromseitiges Ende des ersten Rohrbauteils und/oder ein abstromseitiges Ende des zweiten Rohrbauteils, mit einem Anschlussstück verbunden. Bei der Verbindung kann es sich um eine form-, kraft- und/oder stoffschlüssige Verbindung handeln.

Bevorzugt ist ein anstromseitiges Ende und/oder ein abstromseitiges Ende des Luftleitungsrohres, insbesondere ein anstromseitiges Ende des ersten Rohrbauteils und/oder ein abstromseitiges Ende des zweiten Rohrbauteils, kraftschlüssig mit einem Anschlussstück verbunden.

Unter dem Ausdruck "anstromseitiges Ende des Luftleitungsrohrs, insbesondere des ersten Rohrbauteils" soll im Sinne der vorliegenden Erfindung ein Ende des Luftleitungsrohrs, insbesondere des ersten Rohrbauteils, verstanden werden, an welchem Luft, insbesondere gefilterte Frischluft, durch einen Verdichter (Kompressor) oder Turbolader erzeugte Warm- oder Heißluft oder durch einen Ladeluftkühler erzeugte Kaltluft, in das Luftleitungsrohr, insbesondere in das erste Rohrbauteil, hineinströmt.

Unter dem Ausdruck "abstromseitiges Ende des Luftleitungsrohrs, insbesondere des zweiten Rohrbauteils" soll im Sinne der vorliegenden Erfindung ein Ende des Luftleitungsrohrs, insbesondere des zweiten Rohrbauteils, verstanden werden, an welchem Luft, insbesondere gefilterte Frischluft, durch einen Verdichter (Kompressor) oder Turbolader erzeugte Warm- oder Heißluft oder durch einen Ladeluftkühler erzeugte Kaltluft, aus dem Luftleitungsrohr, insbesondere aus dem zweiten Rohrbauteil, herausströmt.

Bei dem Anschlussstück kann es sich um ein Anschlussstück für einen Luftfilter, einen Verdichter (Kompressor) oder einen Turbolader, einen Ladeluftkühler oder einen Motorzylinder handeln.

Erfindungsgemäß kann es beispielsweise vorgesehen sein, dass ein anstromseitiges Ende des Luftleitungsrohrs, insbesondere des ersten Rohrbauteils, mit einem Anschlussstück für einen Luftfilter und/oder ein abstromseitiges Ende des Luftleitungsrohrs, insbesondere des zweiten Rohrbauteils, mit einem Anschlussstück für einen Verdichter (Kompressor) oder Turbolader verbunden ist. Mit anderen Worten kann es erfindungsgemäß vorgesehen sein, dass ein anstromseitiges Ende des Luftleitungsrohrs, insbesondere des ersten Rohrbauteils, für eine Verbindung mit einem Luftfilter und/oder ein abstromseitiges Ende des Luftleitungsrohrs, insbesondere des zweiten Rohrbauteils, für eine Verbindung mit einem Verdichter (Kompressor) oder Turbolader vorgesehen ist.

Erfindungsgemäß kann es weiterhin vorgesehen sein, dass ein anstromseitiges Ende des Luftleitungsrohrs, insbesondere des ersten Rohrbauteils, mit einem Anschlussstück für einen Verdichter (Kompressor) oder Turbolader und/oder ein abstromseitiges Ende des Luftleitungsrohrs, insbesondere des zweiten Rohrbauteils, mit einem Anschlussstück für ein Ladeluftrohr verbunden ist. Mit anderen Worten kann es erfindungsgemäß vorgesehen sein, dass ein anstromseitiges Ende des Luftleitungsrohrs, insbesondere des ersten Rohrbauteils, für eine Verbindung mit einem Verdichter (Kompressor) oder Turbolader und/oder ein abstromseitiges Ende des Luftleitungsrohrs, insbesondere des zweiten Rohrbauteils, für eine Verbindung mit einem Ladeluftkühler vorgesehen ist.

Erfindungsgemäß kann es weiterhin vorgesehen sein, dass ein anstromseitiges Ende des Luftleitungsrohrs, insbesondere des ersten Rohrbauteils, mit einem Anschlussstück für ein Ladeluftrohr und/oder ein abstromseitiges Ende des Luftleitungsrohrs, insbesondere des zweiten Rohrbauteils, mit einem Anschlussstück für einen Motorzylinder verbunden ist. Mit anderen Worten kann es erfindungsgemäß vorgesehen sein, dass ein anstromseitiges Ende des Luftleitungsrohrs, insbesondere des ersten Rohrbauteils, für eine Verbindung mit einem Ladeluftkühler und/oder ein abstromseitiges Ende des Luftleitungsrohrs, insbesondere des zweiten Rohrbauteils, für eine Verbindung mit einem Motorzylinder vorgesehen ist.

Das Anschlussstück ist in einer zweckmäßigen Ausführungsform in Umfangsrichtung des Luftleitungsrohrs, insbesondere des ersten Rohrbauteils und/oder zweiten Rohrbauteils, ausgebildet.

Insbesondere kann das Anschlussstück kreisringförmig oder im Wesentlichen kreisringförmig ausgestaltet sein.

Bevorzugt ist das Anschlussstück als Muffe ausgestaltet.

In einer unter Dichtigkeitsgesichtspunkten vorteilhaften Ausführungsform handelt es sich bei dem Anschlussstück um ein abdichtendes Anschlussstück.

Vorzugsweise weist das Anschlussstück ein Elastomermaterial auf oder besteht aus einem Elastomermaterial. Bei dem Elastomermaterial kann es sich insbesondere um ein Kautschukmaterial, bevorzugt Acrylat-Kautschuk oder Ethylen-Acrylat-Kautschuk, handeln. Ethylen-Acrylat-Kautschuk ist erfindungsgemäß bevorzugt und beispielsweise unter der Bezeichnung Vamac® kommerziell erhältlich.

Das Anschlussstück weist in einer weiteren Ausführungsform eine in Umfangsrichtung verlaufende Vertiefung, vorzugsweise Nut, auf. Die Vertiefung ist bevorzugt zur Aufnahme eines Befestigungsmittels, vorzugsweise einer Schlauchschelle, vorgesehen.

In einer alternativen Ausführungsform sind ein anstromseitiges Ende des Luftleitungsrohrs, insbesondere des ersten Rohrbauteils, und/oder ein abstromseitiges Ende des Luftleitungsrohrs, insbesondere des zweiten Rohrbauteils, direkt, d.h. ohne Verwendung eines Anschlussstücks, mit einem Befestigungsmittel, insbesondere einer Schlauchschelle, verbunden. Die vorstehend gemachten Ausführungen zu dem Anschlussstück gelten, soweit möglich, entsprechend.

In einer weiteren Ausführungsform handelt es sich bei dem erfindungsgemäßen Luftleitungsrohr um ein Luftansaugrohr.

Unter dem Ausdruck "Luftansaugrohr" soll im Sinne der vorliegenden Erfindung ein Luftleitungsrohr verstanden werden, welches im Ansaugtrakt eines Verbrennungsmotors einen Luftfilter mit einem Verdichter (Kompressor) oder Turbolader oder einen Ladeluftkühler mit einer Drosselklappe verbindet.

In einer alternativen Ausführungsform handelt es sich bei dem Luftleitungsrohr um ein Ladeluftrohr.

Unter dem Ausdruck "Ladeluftrohr" soll im Sinne der vorliegenden Erfindung ein Luftleitungsrohr verstanden werden, welches im Ansaugtrakt eines Verbrennungsmotors einen Verdichter (Kompressor) oder Turbolader mit einem Ladeluftkühler verbindet.

Ein zweiter Aspekt der Erfindung betrifft die Verwendung eines Luftleitungsrohrs gemäß erstem Erfindungsaspekt für den Ansaugtrakt eines Verbrennungsmotors, insbesondere Turbomotors.

Bezüglich weiterer Merkmale und Vorteile, insbesondere des Luftleitungsrohrs, wird vollständig auf die im Rahmen des ersten Erfindungsaspekts gemachten Ausführungen Bezug genommen, welche (sinngemäß) auch für den zweiten Erfindungsaspekt gelten.

Weitere Merkmale und Vorteile ergeben sich aus der nachfolgenden Beschreibung bevorzugter Ausführungsformen anhand von Figuren sowie der dazugehörigen Figurenbeschreibungen. Die nachfolgend beschriebenen Ausführungsformen dienen lediglich der weiteren Erläuterung der Erfindung, ohne diese hierauf zu beschränken. Dabei können einzelne Merkmale jeweils für sich alleine oder in Kombination miteinander verwirklicht sein.

### KURZBESCHREIBUNG DER ZEICHNUNGEN

In den Figuren ist Folgendes schematisch gezeigt:
Fig. 1: eine Ausführungsform eines erfindungsgemäßen Luftleitungsrohrs und
Fig. 2: ein Längsschnitt eines Teils des in Fig. 1 dargestellten Luftleitungsrohrs.

### AUSFÜHRLICHE FIGURENBESCHREIBUNG

Das Luftleitungsrohr 100 weist ein erstes Rohrbauteil 110 sowie ein zweites Rohrbauteil 120 auf.

Das erste Rohrbauteil 110 und das zweite Rohrbauteil 120 sind stoffschlüssig miteinander verbunden. Bevorzugt sind das erste Rohrbauteil 110 und das zweite Rohrbauteil 120 über eine

Schweißverbindung miteinander verbunden. Die Schweißverbindung läuft vorzugsweise entlang der Kontaktflächen zwischen dem ersten Rohrbauteil 110 und dem zweiten Rohrbauteil 120. Bei der Schweißverbindung handelt es sich vorzugsweise um eine Reibschweißverbindung.

Das erste Rohrbauteil 110 ist aus einem flexibleren Material gebildet als das zweite Rohrbauteil 120.

Bevorzugt weist das Material des ersten Rohrbauteils 110 ein Copolyamid auf. Das Copolyamid ist vorzugsweise durch Polykondensation von Hexamethylendiamin, Adipinsäure und ε-Caprolactam hergestellt (Polyamid 6/66).

Das Material des zweiten Rohrbauteils 120 weist vorzugsweise ein verstärktes, insbesondere glasfaserverstärktes, Homopolyamid auf. Bei dem Homopolyamid handelt es sich vorzugsweise um Polyhexamethylenadipinamid, d. h. um ein Polykondensat aus Hexamethylendiamin und Adipinsäure (Polyamid 66).

Sowohl das Copolyamid des ersten Rohrbauteils 110 als auch das Homopolyamid des zweiten Rohrbauteils 120 weisen eine ausreichende mechanische Festigkeit, Steifigkeit sowie Temperaturbeständigkeit auf, um den beim Betrieb eines Verbrennungsmotors, insbesondere Turbomotors, auftretenden Drücken und Temperaturen zu widerstehen.

Gleichzeitig verfügt das Copolyamid des ersten Rohrbauteils 110 über ausreichend flexible Eigenschaften, um beispielsweise eine abdichtende Verbindung mit einem Motorluftfilter zu ermöglichen.

Das Luftleitungsrohr 100, insbesondere das erste Rohrbauteil 110, kann an seinem anstromseitigen Ende 111 mit einem Anschlussstück 115, beispielsweise für einen Luftfilter, verbunden sein. Das Anschlussstück 115 kann als Muffe ausgestaltet sein und ist unter dichtigkeitserhöhenden Gesichtspunkten vorzugsweise aus einem Elastomermaterial, insbesondere aus Ethylen-Acrylat-Kautschuk, gebildet.

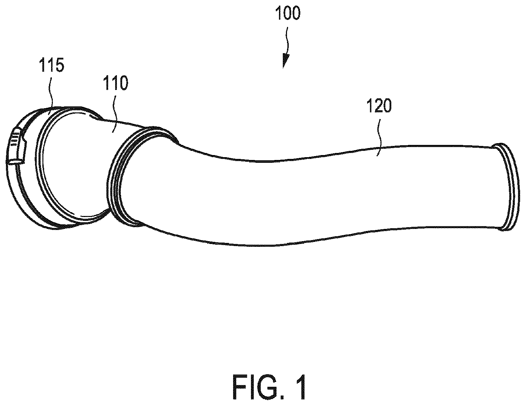

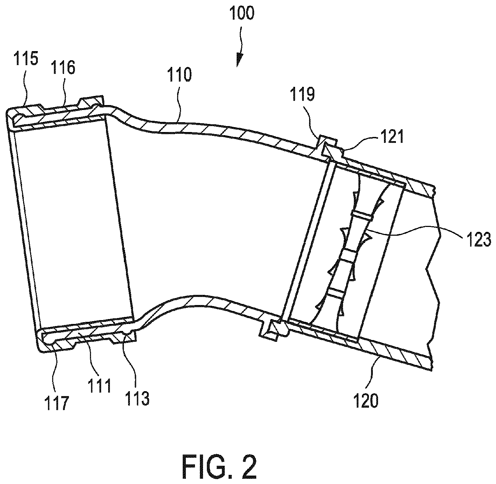

Fig. 2 zeigt schematisch einen Längsschnitt eines Teils des in Fig. 1 dargestellten Luftleitungsrohrs 100.

Zu erkennen ist, dass ein anstromseitiges Ende 111 des ersten Rohrbauteils 110, welches gegenüber dem übrigen ersten Rohrbauteil 110 im Durchmesser erweitert ist, in eine vorzugsweise kreisringförmige Vertiefung des Anschlussstücks 115 eingerastet ist. Hierzu weist das anstromseitige Ende 111 vorzugweise zwei parallel zueinander beabstandete sowie umlaufende Wülste 113; 117 auf, welche beim Einrasten von formkomplementären Ausbuchtungen der Vertiefung aufgenommen werden.

Weiterhin ist zu erkennen, dass ein auskragendes, anstromseitiges Ende 121 des zweiten Rohrbauteils 120 von einer am abstromseitigen Ende 119 des ersten Rohrbauteils 110 ausgebildeten Nut, welche in Richtung des anstromseitigen Endes 121 offen ist, aufgenommen ist.

Eine Schweißnaht verläuft vorzugsweise in Umfangsrichtung des Luftleitungsrohrs zwischen der Nut und dem anstromseitigen Ende 121.

Um die Beschädigung einer Drosselklappe durch Kondenswasser zu verhindern, kann es weiterhin vorgesehen sein, dass das zweite Rohrbauteil 120 einen Kondenswasser-Rückflussverhinderer 123 aufweist. Dieser sammelt Kondenswasser und lässt es verdunsten.

Ferner kann das Anschlussstück 115 eine umlaufende Nut 116 zur Aufnahme eines Befestigungsmittels, wie beispielsweise einer Schlauchschelle, aufweisen.

## Patentansprüche

1. Luftleitungsrohr für den Ansaugtrakt eines Verbrennungsmotor, vorzugsweise Turbomotors, wobei es sich bei dem Luftleitungsrohr um ein Luftansaugrohr oder ein Ladeluftrohr handelt, aufweisend ein erstes Rohrbauteil aus einem ersten Material und ein zweites Rohrbauteil aus einem zweiten Material, wobei das erste Material flexibler ist als das zweite Material, wobei das erste Rohrbauteil und das zweite Rohrbauteil über eine Schweißverbindung miteinander verbunden sind, wobei die Schweißverbindung entlang der Kontaktflächen zwischen dem ersten Rohrbauteil und dem zweiten Rohrbauteil verläuft, das erste Material ein erstes Polyamid aufweist, welches ausgewählt ist aus der Gruppe bestehend aus Polyamid 6, Polyamid 46, Polyamid 66, Polyamid 6/66 und Polyamid 6T/66/6I, und das zweite Material ein mit einem Verstärkungsmittel versehenes zweites Polyamid aufweist, wobei das zweite Polyamid ausgewählt ist aus der Gruppe bestehend aus Polyamid 6, Polyamid 46, Polyamid 66, Polyamid 6/66 und Polyamid 6T/66/6I.

2. Luftleitungsrohr nach Anspruch 1, **dadurch gekennzeichnet, dass** das erste Material frei von Verstärkungsmitteln ist.

3. Luftleitungsrohr nach Anspruch 1 oder 2, **dadurch gekennzeichnet, dass** das Verstärkungsmittel des zweiten Materials ausgewählt ist aus der Gruppe aufweisend Kohlenstoff- bzw. Carbonfasern, Glasfasern, Glaskugeln, Mineralien und Kombinationen davon.

4. Luftleitungsrohr nach einem der vorhergehenden Ansprüche, **dadurch gekennzeichnet, dass** das erste Rohrbauteil und das zweite Rohrbauteil mittels Pressverbindungsschweißen, insbesondere Reibschweißen, vorzugsweise Rotationsreibschweißen, miteinander verbunden sind.

5. Verwendung eines Luftleitungsrohrs nach einem der vorhergehenden Ansprüche für den Ansaugtrakt eines Verbrennungsmotors.

## Claims

1. Air pipe for the intake tract of an internal combustion engine, preferably a turbo engine, wherein the air pipe is an air intake pipe or a charging air pipe, comprising a first pipe component composed of a first material and a second pipe component composed of a second material, wherein the first material is more flexible than the second material, wherein the first pipe component and the second pipe component are connected to each other by welding, wherein the welded joint runs along the contact surfaces between the first pipe component and the second pipe component, the first material comprises a first polyamide which is selected from the group consisting of polyamide 6, polyamide 46, polyamide 66, polyamide 6/66 and polyamide 6T/66/6I, and the second material comprises a second polyamide provided with a reinforcing means, wherein the second polyamide is selected from the group consisting of polyamide 6, polyamide 46, polyamide 66, polyamide 6/66 and polyamide 6T/66/6I.

2. Air pipe according to claim 1, **characterized in that** the first material is free of reinforcing means.

3. Air pipe according to claim 1 or 2, **characterized in that** the reinforcing means of the second material is selected from the group comprising carbon fibers or carbonaceous fibers, glass fibers, glass beads, minerals and combinations thereof.

4. Air pipe according to any of the preceding claims, **characterized in that** the first pipe component and the second pipe component are connected to each other by means of pressure joint welding, more particularly friction welding, and preferably rotary friction welding.

5. Use of an air pipe according to any of the preceding claims for the intake tract of an internal combustion engine.

## Revendications

1. Tube de conduite d'air destiné au système d'admission d'un moteur à combustion interne, de préférence un moteur turbo, dans lequel le tube de conduite d'air est un tube d'entrée d'air ou un tube de chargement d'air, présentant un premier composant de tube composé d'un premier matériau et un deuxième composant de tube composé d'un deuxième matériau, dans lequel le premier matériau est plus flexible que le deuxième matériau, dans lequel le premier composant de tube et le deuxième composant de tube sont reliés l'un à l'autre par une liaison soudée, dans lequel la liaison soudée s'étend le long des zones de contact entre le premier composant de tube et le deuxième composant de tube, le premier matériau présentant un premier polyamide, sélectionné dans le groupe constitué par polyamide 6, polyamide 46, polyamide 6/66, polyamide 66/6 et polyamide 6T/66/6I, et le deuxième matériau présentant un deuxième polyamide prévu d'un moyen de renforcement, dans lequel le deuxième polyamide est sélectionné dans le groupe constitué par polyamide 6, polyamide 46, polyamide 66, polyamide 6/66 et polyamide 6T/66/6I.

2. Tube de conduite d'air selon la revendication 1, **caractérisé en ce que** le premier matériau est exempt de moyens de renforcement.

3. Tube de conduite d'air selon la revendication 1 ou 2, **caractérisé en ce que** le moyen de renforcement du deuxième matériau est sélectionné dans le groupe comprenant des fibres de carbone ou fibres carbonisées, fibres de verre, billes de verre, minéraux et combinaisons de ceux-ci.

4. Tube de conduite d'air selon l'une quelconque des revendications précédentes, **caractérisé en ce que** le premier composant de tube et le deuxième composant de tube sont reliés l'un à l'autre au moyen de soudage par pression, en particulier soudage par friction, de préférence soudage par friction rotative.

5. Utilisation d'un tube de conduite d'air selon l'une quelconque des revendications précédentes destiné au système d'admission d'un moteur à combustion interne.
